# EUROPEAN PATENT APPLICATION

(11) **EP 4 450 412 A1**
(43) Date of publication of application: **23.10.2024**
(21) Application number: 22906897.8
(22) Date of filing: 17.06.2022
(51) Int. Cl.: B65D 5/20, B65D 5/56, B31D 5/02

(54) **ASSEMBLED PAPER CONTAINER, METHOD FOR MANUFACTURING ASSEMBLED PAPER CONTAINER, AND DEVICE FOR MANUFACTURING ASSEMBLED PAPER CONTAINER**

(30) Priority: 15.12.2021 JP 2021203761
(71) Applicant: Tokan Kogyo Co., Ltd., Tokyo 141-0022 (JP)
(72) Inventor: YAMAGUCHI Masaru, Tokyo 141-0022 (JP)
(74) Representative: Rings, Rolf
(86) International application number: PCT/JP2022/024308
(87) International publication number: WO 2023/112360

(57) **Abstract**

[Problem]

Provided is an assembled paper container capable of suppressing leakage of contained matter or seepage of contained matter from a container section of a container main body.

[Solution]

An assembled paper container 1 includes a container main body 11 including a container section 12, and a resin film 3 covered over an inner surface of the container main body 11. The container main body 11 includes a bottom surface 121, a plurality of side surfaces 122, and a flange section 13. The flange section 13 has a top surface 131 provided with a step 22 extending outward from the container section 12 side, and the step 22 is generated by bonding fold-back pieces 13a, 13b together so as to be mutually overlapped after the assembly. The step 22 is reduced by pressing an edge portion 31 of the upper fold-back piece 13a into the lower fold-back piece 13b side. The resin film 3 is approximately flat in a part covered over the top surface of the flange section 13 of the container main body 11 even above the step 22.

## Description

### TECHNICAL FIELD

The present invention relates to an assembled paper container, a method for manufacturing the assembled paper container, and a manufacturing apparatus of the assembled paper container.

### BACKGROUND ART

Conventionally, there has been known an assembled paper container in which a tray shaped container main body including a flange section in an upper end is assembled from a blank sheet using paper as a main raw material. In the assembled paper container, a thermoplastic resin film having resin property is sometimes attached to an inner surface of the container main body including a top surface of the flange section (see Patent Documents 1, 2, and the like). The assembled paper container with the resin film has resin property, and thus is mainly used as a tray or a bowl for containing food products and the like.

Compared with a plastic container, the assembled paper container is a product that can, for example, suppress generation of secondary microplastic occurred in the environment, and be environmentally considerate. Furthermore, the resin film can be stripped off from the container main body, thereby allowing the resin film to be separated from the paper container main body, and thus the resin film and the container main body can be recycled individually. Given these advantages, the assembled paper container is expected to be used as a packaging container for food products and the like or a storage container for food products and the like by applying, for example, Modified Atmosphere Packaging (MAP).

Patent Document 1: JP-A-H06-293334
Patent Document 2: JP-A-2019-172339

### DISCLOSURE OF THE INVENTION

### PROBLEMS TO BE SOLVED BY THE INVENTION

In the container main body of the conventional assembled paper container, due to its shape, gaps caused by end surfaces of the blank sheet approaching one another occur on the top surface of the flange section. Currently, even by covering the inner surface of the container main body including the top surface of the flange section with the resin film, these gaps are difficult to be closed completely. The resin film is thin, and in a case where the resin film is covered over the inner surface of the container main body including the top surface of the flange section by, for example, vacuum pressure, the resin film gets suctioned into the gaps. Therefore, the gaps are difficult to be closed by the resin film alone.

A packaging method of packaging by replacing air inside a container section of the container main body with a food packaging gas that is appropriate for food products is being developed (such as MAP). In a case where such packaging method is applied to the assembled paper container with the resin film, a top seal becomes attached to the resin film on the top surface of the flange section. However, since the top seal is also thin, even by attaching the top seal to the resin film, a cavity along the gap occurs between the top surface of the resin film and a lower surface of the top seal. That is, even with the top seal, the cavity is difficult to be closed completely. Moreover, both ends of the cavity are opened. Therefore, the container section of the container main body is communicated with an outside of the container main body via the cavity.

Based on the above, in the assembled paper container with the resin film, even by covering the container section with the top seal, leakage of contained matter or seepage of contained matter from the container section may possibly occur via the cavity.

Therefore, the present invention is made in consideration of the above-described problems, and it is an object of the present invention to provide an assembled paper container capable of suppressing leakage of contained matter or seepage of contained matter from a container section of a container main body, a method for manufacturing the assembled paper container, and a manufacturing apparatus of the assembled paper container.

### SOLUTIONS TO THE PROBLEMS

An assembled paper container according to a first invention is an assembled paper container that includes a container main body and a resin film. The container main body is assembled from a blank sheet using paper as a main material. The container main body includes a container section. The resin film is covered over an inner surface of the container main body. The container main body includes a bottom surface, a plurality of side surfaces standing upright from the bottom surface, and a flange section continuous with upper end portions of the plurality of side surfaces and provided to extend toward an outside of the container section after the assembly. The flange section has a top surface provided with a step extending outward from the container section side, the step is generated by bonding fold-back pieces of the blank sheet together so as to be mutually overlapped after the assembly, and the step is reduced by pressing an edge portion of the upper fold-back piece into the lower fold-back piece side. The resin film is approximately flat in a part covered over the top surface of the flange section of the container main body even above the step.

In an assembled paper container according to a second invention, which is in the first invention, the container main body is assembled from one blank sheet.

An assembled paper container according to a third invention, which is in the first invention or the second invention, further includes a top seal attached to the resin film covered over the top surface of the flange section and covering the container section. The top seal traverses the step and is attached to the resin film above the top surface of the flange section.

In an assembled paper container according to a fourth invention, which is in the third invention, the resin film is formed to be folded in three or more layers due to pressing by the top seal at the step.

A method for manufacturing an assembled paper container according to a fifth invention is a method for manufacturing an assembled paper container that includes a container main body and a resin film. The container main body is assembled from a blank sheet using paper as a main material. The container main body includes a container section. The resin film is covered over an inner surface of the container main body. The method includes: a case assembling step of assembling the container main body by standing a plurality of side surfaces from a bottom surface of the blank sheet to form the container section of the container main body, and folding back upper portions of the plurality of side surfaces and bonding fold-back pieces of the blank sheet together so as to be mutually overlapped to form a flange section provided to extend toward an outside of the container section, the flange section having a top surface provided with a step extending outward from the container section; and a step reducing and resin film covering step of covering the inner surface of the container main body with the resin film by locating the resin film over the inner surface of the container main body assembled in the case assembling step, suctioning a surface of the resin film in a region traversing the step, pressing an edge portion of the upper fold-back piece into the lower fold-back piece side to reduce the step, and extracting air between the container main body and the resin film from a gap between peripheries thereof.

A method for manufacturing an assembled paper container according to a sixth invention, which is in the fifth invention, further includes, after the step reducing and resin film covering step, a top seal attaching step of attaching a top seal to the resin film covered over the top surface of the flange section so as to traverse the step while pressing an upper portion of the step above the top surface of the flange section.

A manufacturing apparatus of an assembled paper container according to a seventh invention is a manufacturing apparatus of an assembled paper container that includes a container main body and a resin film. The container main body is assembled from a blank sheet using paper as a main material. The container main body includes a container section. The resin film is covered over an inner surface of the container main body. The manufacturing apparatus includes a lower mold, a suction covering section, an upper mold, a flange pressing section, and a step reducing recess. The container main body is placed on the lower mold. The suction covering section is provided in the lower mold and suctions air between the resin film and the suction covering section to cover the inner surface of the container main body with the resin film. The upper mold is opposed to the lower mold and has the resin film interposed between the lower mold and the upper mold. The flange pressing section is housed in the upper mold and presses the flange section of the container main body and the resin film on the flange section. The step reducing recess is provided in the lower mold below the flange pressing section in the upper mold. The step reducing recess is provided to reduce the step by pressing an edge portion of an upper fold-back piece constituting the step into a lower fold-back piece side when the resin film is located and a surface of the resin film in a region traversing the step of the flange section of the container main body is suctioned by the suction covering section. The step reducing recess has a width equal to or more than a length between the edge portions of the upper fold-back piece.

A manufacturing apparatus of an assembled paper container according to an eighth invention is a manufacturing apparatus of an assembled paper container configured to attach a top seal to the resin film covered over the top surface of the flange section of the assembled paper container manufactured by the manufacturing apparatus of an assembled paper container according to the seventh invention, and cover the container section. The manufacturing apparatus includes a seal head provided above the top seal, and a seal bucket provided below the assembled paper container. The seal bucket upper portion is made of an elastic member. The seal bucket lower portion is made of a hard member.

### EFFECTS OF THE INVENTION

The present invention with the above-described configurations can provide the assembled paper container capable of suppressing leakage of contained matter or seepage of contained matter from the container section of the container main body.

### BRIEF DESCRIPTION OF THE DRAWINGS

Fig. 1(a) is a plan view illustrating an assembled paper container according to an embodiment of the present invention, Fig. 1(b) is a side view illustrating the assembled paper container of Fig. 1(a), and Fig. 1(c) is a perspective view illustrating the assembled paper container of Fig. 1(a).
Fig. 2 is a developed view illustrating a blank sheet used for the assembled paper container of Fig. 1.
Fig. 3 is an enlarged cross-sectional view of a part along a line A-A viewed from an arrow direction of Fig. 1(a).
Fig. 4 is a plan view illustrating an aspect in which a container section of the assembled paper container of Fig. 1 is covered with a top seal.
Fig. 5(a) is an enlarged cross-sectional view of a part along a line B-B viewed from an arrow direction of Fig. 4, and Fig. 5(b) is an enlarged view of a part C of Fig. 5(a).
Fig. 6 is a flowchart illustrating a process in a method for manufacturing the assembled paper container according to the embodiment of the present invention.
Fig. 7(a) and Fig. 7(b) are schematic cross-sectional views illustrating an example of a manufacturing apparatus of the assembled paper container according to the embodiment of the present invention.
Fig. 8(a) to Fig. 8(c) are enlarged explanatory drawings for describing a main part of the manufacturing apparatus of Fig. 7.
Fig. 9 is a schematic block diagram illustrating an example of a manufacturing system of the assembled paper container according to the embodiment of the present invention.
Fig. 10(a) to Fig. 10(c) are enlarged explanatory drawings for describing a main part of a pressing machine as a manufacturing apparatus of the assembled paper container configured to attach a top seal to the assembled paper container according to the embodiment of the present invention.

### DESCRIPTION OF PREFERRED EMBODIMENTS

The following describes an embodiment exemplified by applying the present invention by referring to the drawings.

### [Embodiment]

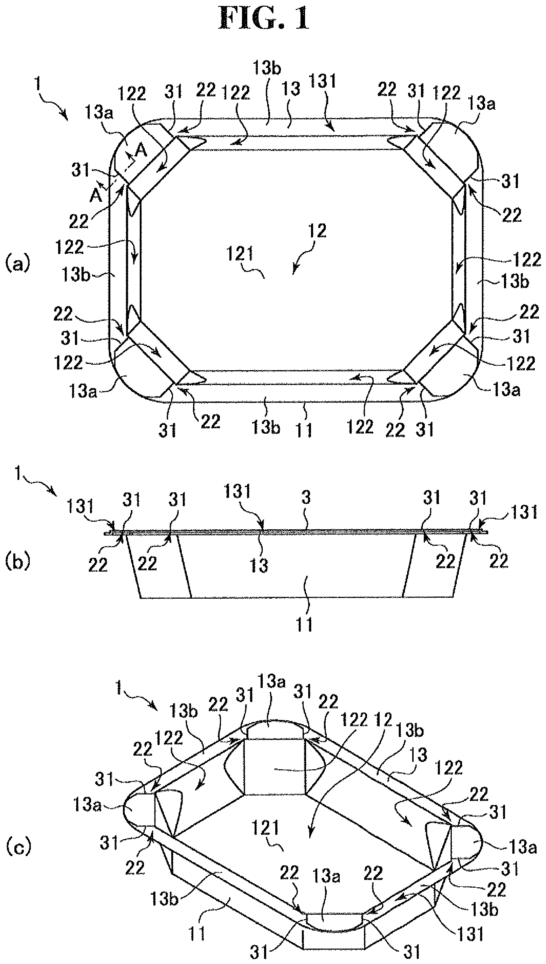

An assembled paper container 1 according to the embodiment of the present invention includes, as illustrated in Fig. 1(a) to Fig. 1(c), a container main body 11 and a resin film 3 covered over an inner surface of the container main body 11.

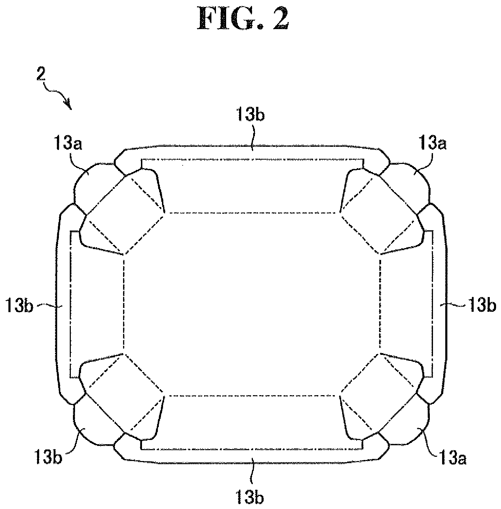

The container main body 11 includes a container section 12 and a flange section 13. Then, the container main body 11 is assembled from one blank sheet 2 using paper as a main material illustrated in Fig. 2. In Fig. 2, the dotted lines indicate "trough folds," and the one dot chain lines indicate "mountain folds." The trough fold lines and the mountain fold lines are indicated by, for example, perforations, half cuttings, and ruled lines. Furthermore, the solid lines in the blank sheet 2 indicate "notches." By performing "trough folds" and "mountain folds" on the blank sheet 2, and bonding fold-back pieces 13a, 13b together so as to be mutually overlapped, the container main body 11 is configured.

In this embodiment, the container section 12 has eight side surfaces 122 standing upright from a bottom surface 121. The container section 12 can be configured with three or more side surfaces 122.

The flange section 13 is continuous with upper end portions of the respective side surfaces 122, and provided to extend toward the outside of the container section 12. A top surface 131 of the flange section 13 is provided with two steps 22 at each of four corners, and the step 22 is formed by bonding the fold-back pieces 13a, 13b of the blank sheet 2 together so as to be mutually overlapped after the assembly and extends outward from the container section 12 side.

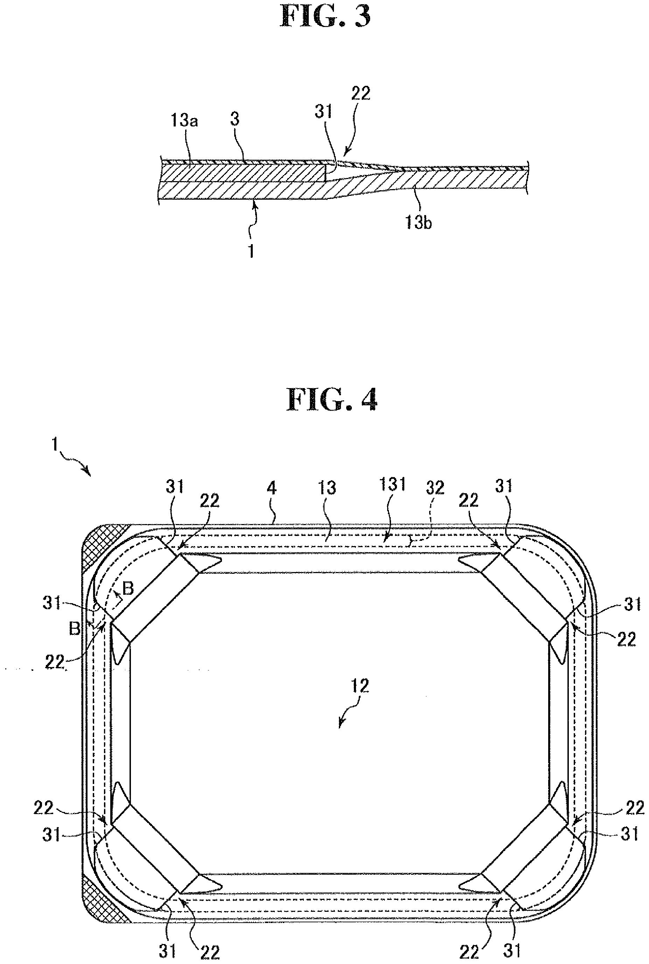

Then, as illustrated in Fig. 3, an edge portion 31 of the upper fold-back piece 13a is pressed into the lower fold-back piece 13b side, and thus the step 22 is reduced.

The resin film 3 is covered over the inner surface of the container main body 11 including the top surface 131 of the flange section 13. As illustrated in Fig. 3, the resin film 3 is slightly uneven and approximately flat even above the step 22.

Examples of the resin appropriate for covering the inner surface of the container main body 11 and used for the resin film 3 include thermoplastic resins, for example, polyolefin, such as polyethylene (PE) and polypropylene (PP), polyester, such as polyvinyl chloride and polyethylene terephthalate (PET), ethylene-vinyl acetate copolymer (EVA), ethylene-acrylic acid copolymer, polyamide, polyvinylidene chloride, polystyrene, polycarbonate, polybutene, and polyvinyl alcohol. The resin film 3 may be a single film made of any above-described material, or a film made by mixing a plurality of the above-described materials. Furthermore, the resin film 3 may be a single layer film or a laminated film laminating a plurality of layers.

Next, from the above-described aspect, the assembled paper container 1 in an aspect in which the container section 12 is covered with a top seal 4 will be described.

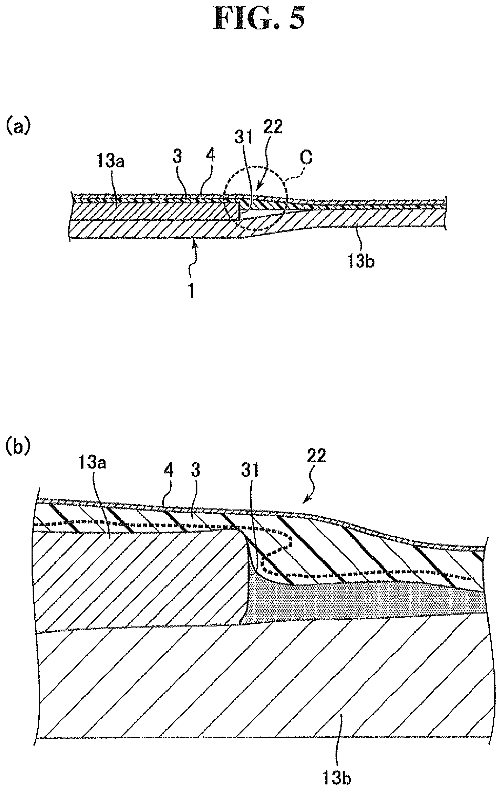

As illustrated in Fig. 4, the assembled paper container 1 can pack and contain a content, such as a food product, by covering the container section 12 with the top seal 4. The top seal 4 is attached to the resin film 3 on the top surface 131 of the flange section 13. This causes the top seal 4 to cover the container section 12. In this embodiment, the top seal 4 traverses the step 22 and is attached to the resin film 3 above the top surface 131 of the flange section 13. When the top seal 4 is attached to the resin film 3, the top seal 4 is pressed while being heated by a pressing machine in a pressing region 32 indicated by dotted lines. This embodiment is designed such that the outer portion of the step 22 is fitted in a width of the pressing region 32. Thus, the outer portion of the step 22 can be surely pressed by the pressing machine, and the step 22 can be further reduced as illustrated in Fig. 5(a) and Fig. 5(b).

Here, above the step 22, a lower surface of the top seal 4 can be sufficiently thermocompression-bonded to a top surface of the resin film 3, and the top seal 4 can be firmly attached to the top surface of the resin film 3 regardless of the presence of the reduced and gradual step 22.

The resin film 3 is formed to be folded in a plurality of three or more layers due to the pressing by the top seal 4 at the step 22 and provides a reactive force against the top seal 4 during the pressing, and this causes the lower surface of the top seal 4 to be easily thermocompression-bonded to the top surface of the resin film 3.

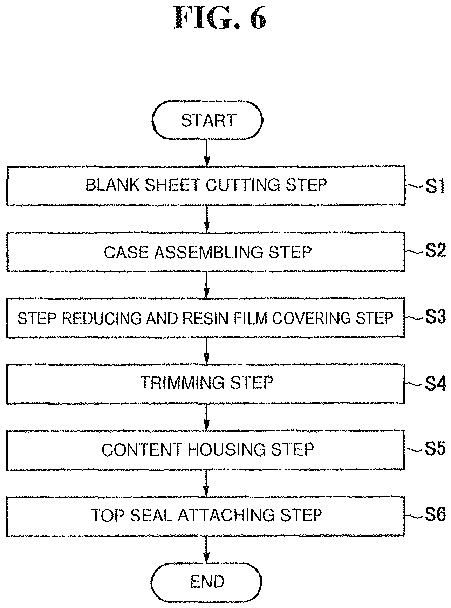

Next, with reference to Fig. 6, a method for manufacturing the assembled paper container 1 according to the embodiment of the present invention will be described.

First, in the method for manufacturing the assembled paper container 1 according to the embodiment of the present invention, a blank sheet cutting step S1 of cutting to form the above-described blank sheet 2 is performed, thus fabricating the blank sheet 2.

Subsequently, a case assembling step S2 of assembling the container main body 11 from the blank sheet 2 fabricated by cutting out in the blank sheet cutting step S1 is performed.

Subsequently, a step reducing and resin film covering step S3 is performed. In the step reducing and resin film covering step S3, the resin film 3 is located over the inner surface of the container main body 11 assembled in the case assembling step S2, a surface of the resin film 3 in a region traversing the step 22 is suctioned, the edge portion 31 of the upper fold-back piece 13a is pressed into the lower fold-back piece 13b side to reduce the step 22, and a pressure is applied from the upper side of the resin film 3 while extracting air between the container main body 11 and the resin film 3 from a gap between peripheries thereof by, for example, vacuum pressure, thereby covering the inner surface of the container main body 11 with the resin film 3. While the vacuum pressure is described as an example of the method of covering the container main body 11 with the resin film 3, the air between the container main body 11 and the resin film 3 may be extracted by only suctioning the air between the container main body 11 and the resin film 3 from the gap therebetween, or by only applying a pressure from the upper side of the resin film 3.

Subsequently, a trimming step S4 is performed. In the trimming step S4, a trimming is performed to remove the excess resin film 3 around the assembled paper container 1 fabricated in the step reducing and resin film covering step S3 in the state where the top seal 4 has not been attached.

Subsequently, a content housing step S5 is performed. In the content housing step S5, a content, such as a food product, is housed in the container section 12 of the assembled paper container 1 from which the excess resin film 3 in the periphery has been removed in the trimming step S4.

At last, a top seal attaching step S6 is performed. In the top seal attaching step S6, the top seal 4 is attached to the resin film 3 covered over the top surface of the flange section 13 of the assembled paper container 1 in the state where the content, such as a food product, is housed in the container section 12 in the content housing step S5 so as to traverse the step 22 while pressing the upper portion of the step 22 above the top surface of the flange section 13 using a pressing machine.

Thus, the assembled paper container 1 is manufactured and the method for manufacturing the assembled paper container 1 according to this embodiment is completed.

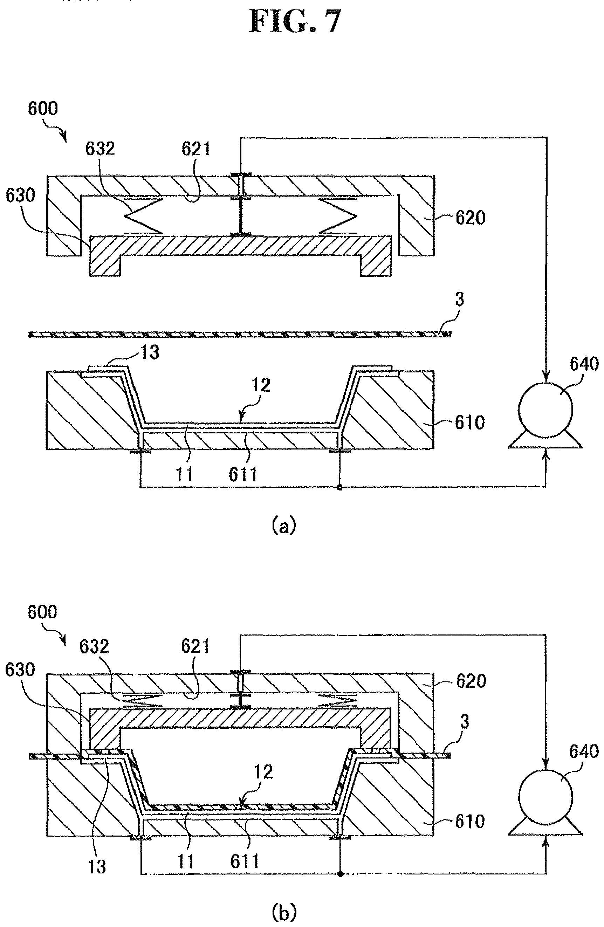

Next, with reference to Fig. 7, a manufacturing apparatus 600 of the assembled paper container 1 according to the embodiment of the present invention will be described.

The manufacturing apparatus 600 of the assembled paper container 1 according to the embodiment of the present invention is, as illustrated in Fig. 7(a) and Fig. 7(b), a novel manufacturing apparatus capable of manufacturing the assembled paper container 1 according to the embodiment. The manufacturing apparatus 600 is configured to cover the container main body 11 having the flange section 13 with the resin film 3, and configured to reduce the step 22 during the covering.

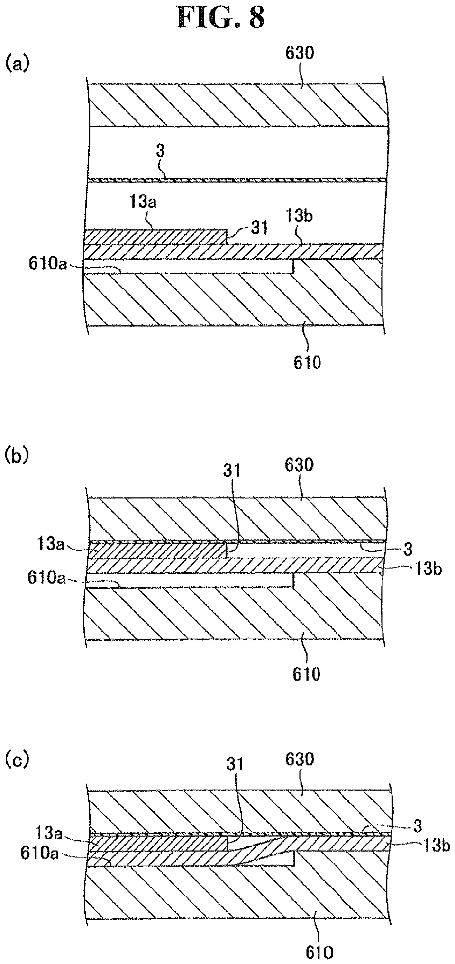

The manufacturing apparatus 600 includes a lower mold 610, a suction covering section 611, an upper mold 620, a flange pressing section 630, and a step reducing recess 610a (see Fig. 8(a) to Fig. 8(c)).

The container main body 11 is placed on the lower mold 610.

The suction covering section 611 is provided in the lower mold 610, and connected to a vacuum pump 640. The suction covering section 611 is configured to suction the resin film 3 via the container main body 11 placed on the lower mold 610 to extract the air from the gap with the periphery of the container main body 11.

The upper mold 620 is opposed to the lower mold 610, and vertically movable. The resin film 3 is sandwiched between the lower mold 610 and the upper mold 620. When the upper mold 620 is brought in close contact with the lower mold 610 having the resin film 3 sandwiched between the upper mold 620 and the lower mold 610, a processing space in an approximately sealed state is formed. Inside the processing space, the resin film 3 is covered over the container section 12 and the flange section 13 by, for example, vacuum pressure.

The flange pressing section 630 is housed in the upper mold 620. The flange pressing section 630 is supported to a top panel portion 621 of the upper mold 620 by an extendable elastic member 632, such as a spring. The flange pressing section 630 presses the flange section 13 and the resin film 3 on the flange section 13, for example, during the vacuum pressure.

As illustrated in Fig. 8(a) to Fig. 8(c), the step reducing recess 610a is provided in the lower mold 610 below the flange pressing section 630 of the upper mold 620. The step reducing recess 610a is provided to reduce the step 22 by pressing the edge portions 31 of the upper fold-back piece 13a constituting the step 22 into the lower fold-back piece 13b side when the resin film 3 is located and the surface of the resin film 3 in the region traversing the step 22 of the flange section 13 of the container main body 11 is suctioned by the suction covering section 611. The step reducing recess 610a has a width exceeding a length between the edge portions 31, 31 of the upper fold-back piece 13a. In this embodiment, the suction covering section 611 suctions the resin film 3 in a direction toward the container main body 11. The width of the step reducing recess 610a may be the same as the length between the edge portions 31, 31 of the upper fold-back piece 13a in some embodiments. However, the width of the step reducing recess 610a is preferred to exceed the length between the edge portions 31, 31 of the upper fold-back piece 13a like this embodiment because an unreasonable shearing force or the like is not applied to the lower fold-back piece 13b.

Here, a state of reducing the step 22 will be described.

As illustrated in Fig. 8(a) and Fig. 8(b), the container main body 11 and the resin film 3 are located and attached so as to traverse the step 22 of the flange section 13 between the lower mold 610 with the step reducing recess 610a and the flange pressing section 630.

Further, as illustrated in Fig. 8(c), the flange pressing section 630 is moved down to the lower mold 610 side to reduce the step 22. Then, the flange pressing section 630 is moved up, and the assembled paper container 1 is removed from the manufacturing apparatus 600.

Finally, by performing a trimming for removing the excess resin film 3 around the assembled paper container 1, the assembled paper container 1 illustrated in Fig. 1 and Fig. 3 is completed.

Accordingly, the manufacturing apparatus 600 of the assembled paper container 1 according to the embodiment can manufacture the assembled paper container 1.

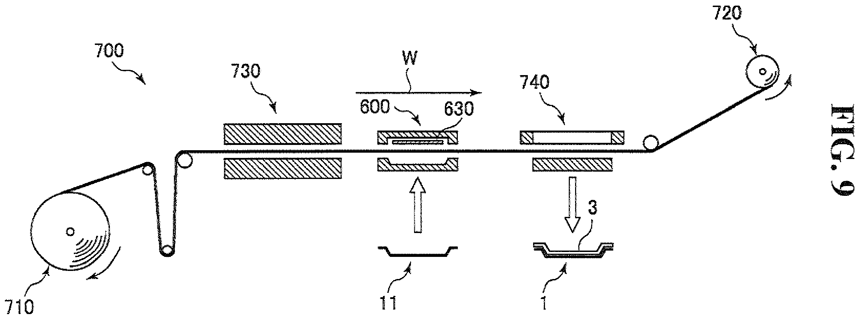

Next, with reference to Fig. 9, a manufacturing system 700 of the assembled paper container 1 according to the embodiment of the present invention will be described.

The manufacturing system 700 of the assembled paper container 1 according to the embodiment of the present invention covers the container main body 11 having the flange section 13 with the resin film 3 while winding the resin film 3 wound around a supplying roller 710 using a winding roller 720.

As illustrated in Fig. 9, the manufacturing system 700 includes the supplying roller 710, the winding roller 720, a heating machine 730, the manufacturing apparatus 600, and a trimming machine 740.

One roll of the strip-shaped resin film 3 is mounted to the supplying roller 710.

One end of the strip-shaped resin film 3 is mounted to the winding roller 720, and the winding roller 720 winds the strip-shaped resin film 3. The strip-shaped resin film 3 moves along a feed direction W from the supplying roller 710 toward the winding roller 720.

The heating machine 730 is arranged between the supplying roller 710 and the winding roller 720, and heats the strip-shaped resin film 3.

The manufacturing apparatus 600 is as described above, and arranged between the heating machine 730 and the winding roller 720.

The trimming machine 740 is arranged between the manufacturing apparatus 600 and the winding roller 720, and trims the assembled paper container 1 manufactured by the manufacturing apparatus 600. Accordingly, the assembled paper container 1 is separated from the strip-shaped resin film 3.

Thus, the manufacturing system 700 of the assembled paper container 1 according to the embodiment includes the manufacturing apparatus 600. Accordingly, the manufacturing system 700 can manufacture the assembled paper container 1. Moreover, the manufacturing system 700 can successively manufacture the assembled paper container 1 from the strip-shaped resin film 3.

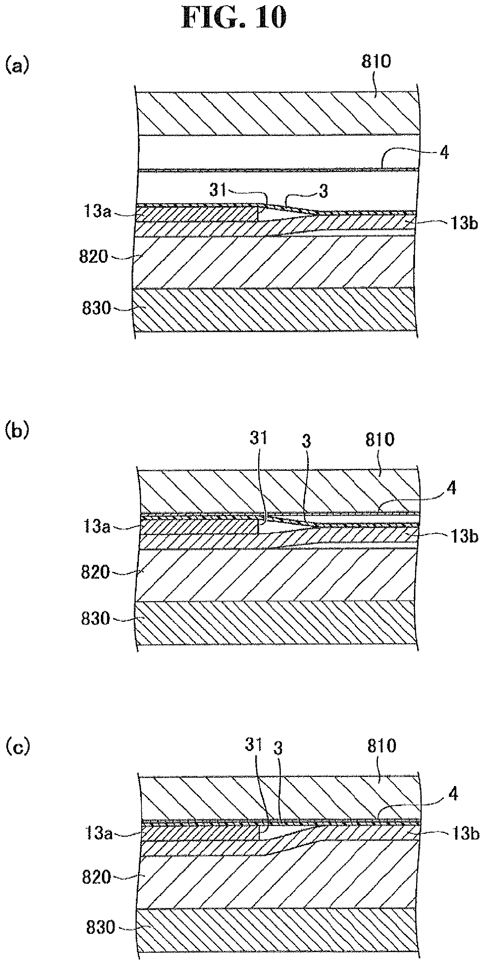

At last, with reference to Fig. 10(a) to Fig. 10(c), a pressing machine as the manufacturing apparatus according to the embodiment of the present invention will be described. The pressing machine is configured to attach the top seal 4 to the resin film 3 covered over the top surface of the flange section 13 of the assembled paper container 1 manufactured by the above-described manufacturing apparatus 600 to cover the container section 12.

As illustrated in Fig. 10(a) to Fig. 10(c), the pressing machine includes a seal head 810 provided above the top seal 4 and seal buckets 820, 830 provided below the assembled paper container 1. A seal bucket upper portion 820 is made of an elastic member, such as a rubber, and a seal bucket lower portion 830 is made of a hard member, such as a metal.

Then, the seal head 810 is moved down and heated to attach the top seal 4 to the flange section 13 of the assembled paper container 1, thereby providing the use form as illustrated in Fig. 4, Fig. 5(a), and Fig. 5(b).

Since the seal bucket upper portion 820 is made of an elastic member, such as a rubber, the elastic deformation of the seal bucket upper portion 820 allows the outer portion of the step 22 to be surely pressed by the pressing machine when the top seal 4 is attached as described above, and the step 22 can be further reduced as illustrated in Fig. 5(a) and Fig. 5(b).

According to the above-described embodiment of the present invention, the top seal 4 can be thermocompression-bonded to the top surface of the resin film 3 above the step 22, and the top seal 4 can be easily covered over the top surface of the resin film 3 above the step 22 regardless of the presence of the step 22.

The resin film 3 is formed to be folded in a plurality of layers due to the pressing by the top seal 4 at the step 22 and provides a reactive force against the top seal 4 during the pressing, and this causes the lower surface of the top seal 4 to be easily thermocompression-bonded to the top surface of the resin film 3.

Thus, the embodiment can provide the assembled paper container 1 capable of suppressing leakage of contained matter or seepage of contained matter from the container section 12 of the container main body 11 by the resin film 3 and the top seal 4.

Here, a plurality of samples of an assembled paper container to which the present invention was not applied and the assembled paper container 1 to which the present invention was applied were prepared under the same condition as much as possible, and an experimental verification was performed by comparing the same number of samples. As a verification result, while leakage of contained matter or seepage of contained matter occurred in most of the samples of the assembled paper container to which the present invention was not applied, leakage of contained matter or seepage of contained matter from the container section 12 of the container main body 11 did not occur in any sample of the assembled paper container 1 to which the present invention was applied.

While the embodiments of the present invention have been described, the embodiments have been presented as examples, and are not intended to limit the scope of the invention. The novel embodiments described herein can be embodied in a variety of other configurations. Various omissions, substitutions, and changes can be made without departing from the gist of the invention. The embodiments and the modifications thereof are within the scope and the gist of the invention and within the scope of the inventions described in the claims and their equivalents.

### DESCRIPTION OF REFERENCE SIGNS

- 1:: Assembled paper container
- 11:: Container main body
- 12:: Container section
- 121:: Bottom surface
- 122:: Side surface
- 13:: Flange section
- 131:: Top surface
- 13a:: Fold-back piece
- 13b:: Fold-back piece
- 2:: Blank sheet
- 22:: Step
- 3:: Resin film
- 31:: Edge portion of upper fold-back piece
- 32:: Pressing region
- 4:: Top seal
- 600:: Manufacturing apparatus
- 610:: Lower mold
- 610a:: Step reducing recess
- 611:: Suction covering section
- 620:: Upper mold
- 621:: Top panel portion
- 630:: Flange pressing section
- 632:: Elastic member
- 640:: Vacuum pump
- 700:: Manufacturing system
- 710:: Supplying roller
- 720:: Winding roller
- 730:: Heating machine
- 740:: Trimming machine
- 810:: Seal head
- 820:: Seal bucket upper portion
- 830:: Seal bucket lower portion
- S 1:: Blank sheet cutting step
- S2:: Case assembling step
- S3:: Step reducing and resin film covering step
- S4:: Trimming step
- S5:: Content housing step
- S6:: Top seal attaching step
- W:: Feed direction

## Claims

1. An assembled paper container comprising:
a container main body assembled from a blank sheet using paper as a main material, the container main body including a container section; and
a resin film covered over an inner surface of the container main body, wherein
the container main body includes:
a bottom surface;
a plurality of side surfaces standing upright from the bottom surface; and
a flange section continuous with upper end portions of the plurality of side surfaces and provided to extend toward an outside of the container section after the assembly, wherein
the flange section has a top surface provided with a step extending outward from the container section side, the step is generated by bonding fold-back pieces of the blank sheet together so as to be mutually overlapped after the assembly, and the step is reduced by pressing an edge portion of the upper fold-back piece into the lower fold-back piece side, and
the resin film is approximately flat in a part covered over the top surface of the flange section of the container main body even above the step.

2. The assembled paper container according to claim 1, wherein
the container main body is assembled from one blank sheet.

3. The assembled paper container according to claim 1 or 2, further comprising
a top seal attached to the resin film covered over the top surface of the flange section and covering the container section, wherein
the top seal traverses the step and is attached to the resin film above the top surface of the flange section.

4. The assembled paper container according to claim 3, wherein
the resin film is formed to be folded in three or more layers due to pressing by the top seal at the step.

5. A method for manufacturing an assembled paper container that includes a container main body and a resin film, the container main body being assembled from a blank sheet using paper as a main material, the container main body including a container section, the resin film being covered over an inner surface of the container main body, the method comprising:
a case assembling step of assembling the container main body by standing a plurality of side surfaces from a bottom surface of the blank sheet to form the container section of the container main body, and folding back upper portions of the plurality of side surfaces and bonding fold-back pieces of the blank sheet together so as to be mutually overlapped to form a flange section provided to extend toward an outside of the container section, the flange section having a top surface provided with a step extending outward from the container section; and
a step reducing and resin film covering step of covering the inner surface of the container main body with the resin film by locating the resin film over the inner surface of the container main body assembled in the case assembling step, suctioning a surface of the resin film in a region traversing the step, pressing an edge portion of the upper fold-back piece into the lower fold-back piece side to reduce the step, and extracting air between the container main body and the resin film from a gap between peripheries thereof.

6. The method for manufacturing an assembled paper container according to claim 5, further comprising
after the step reducing and resin film covering step, a top seal attaching step of attaching a top seal to the resin film covered over the top surface of the flange section so as to traverse the step while pressing an upper portion of the step above the top surface of the flange section.

7. A manufacturing apparatus of an assembled paper container that includes a container main body and a resin film, the container main body being assembled from a blank sheet using paper as a main material, the container main body including a container section, the resin film being covered over an inner surface of the container main body, the manufacturing apparatus comprising:
a lower mold on which the container main body is placed;
a suction covering section provided in the lower mold and suctioning air between the resin film and the suction covering section to cover the inner surface of the container main body with the resin film;
an upper mold opposed to the lower mold and having the resin film interposed between the lower mold and the upper mold;
a flange pressing section housed in the upper mold and pressing the flange section of the container main body and the resin film on the flange section; and
a step reducing recess provided in the lower mold below the flange pressing section in the upper mold, the step reducing recess being provided to reduce the step by pressing an edge portion of an upper fold-back piece constituting the step into a lower fold-back piece side when the resin film is located and a surface of the resin film in a region traversing the step of the flange section of the container main body is suctioned by the suction covering section, the step reducing recess having a width equal to or more than a length between the edge portions of the upper fold-back piece.

8. A manufacturing apparatus of an assembled paper container configured to attach a top seal to the resin film covered over the top surface of the flange section of the assembled paper container manufactured by the manufacturing apparatus of an assembled paper container according to claim 7, and cover the container section, the manufacturing apparatus comprising:
a seal head provided above the top seal; and
a seal bucket provided below the assembled paper container, wherein
the seal bucket upper portion is made of an elastic member, and
the seal bucket lower portion is made of a hard member.
